# EUROPÄISCHE PATENTSCHRIFT

(11) **EP 3 374 587 B1**
(45) Veröffentlichungstag und Bekanntmachung des Hinweises auf die Patenterteilung: **01.04.2020**
(21) Anmeldenummer: 16829070.8
(22) Anmeldetag: 11.11.2016
(51) Int. Cl.: E05F 5/00, F16F 9/18, F16F 9/53, F16F 9/56, F16D 57/00, E05C 17/22, F16F 9/20, E05F 15/00

(54) **TÜRKOMPONENTE MIT EINER STEUERBAREN DÄMPFEREINRICHTUNG**
DOOR COMPONENT COMPRISING A CONTROLLABLE DAMPING SYSTEM
ÉLÉMENT DE PORTE AVEC DISPOSITIF D'AMORTISSEMENT COMMANDABLE

(30) Priorität: 11.11.2015 DE 102015119505; 21.07.2016 WO PCT/EP2016/067472
(43) Veröffentlichungstag der Anmeldung: 19.09.2018
(73) Patentinhaber: Inventus Engineering GmbH, 6771 St. Anton i. M. (AT)
(72) Erfinder: BATTLOGG, Stefan, 6771 St. Anton i.M. (AT)
(74) Vertreter: BSB Patentanwälte Schütte & Engelen Partnerschaft mbB
(86) Internationale Anmeldenummer: PCT/EP2016/077474
(87) Internationale Veröffentlichungsnummer: WO 2017/081280

(56) Entgegenhaltungen:
- EP-A2- 2 703 686
- DE-A1- 19 514 610
- DE-A1- 19 947 203
- DE-A1-102004 061 687

## Beschreibung

Die vorliegende Erfindung betrifft eine Türkomponente mit einer steuerbaren Dämpfereinrichtung insbesondere für ein Kraftfahrzeug. Dabei umfasst die Türkomponente zwei relativ zueinander bewegbare Anschlusseinheiten, deren Relativbewegung zueinander durch wenigstens eine steuerbare Dämpfereinrichtung abgebremst werden kann. Dabei sind eine der beiden Anschlusseinheiten mit einer Tragkonstruktion und die andere der beiden Anschlusseinheiten mit einer verschwenkbaren Tür verbindbar bzw. verbunden.

Im Stand der Technik sind verschiedenste Türkomponenten bekannt geworden, mit denen eine gezielte Dämpfung der Türbewegung und insbesondere auch ein gezieltes Fixieren der Tür in vorbestimmten Winkelstellungen möglich ist. Meist werden dazu mechanische Systeme eingesetzt, die kostengünstig sind und in zwei oder drei Winkelstellungen eine Feststellung der Tür eines Kraftfahrzeugs erlauben. Dadurch kann der Benutzer die Tür in eine der Winkelstellungen bringen, die aufgrund der aktuellen Platzsituation geeignet erscheint, und kann dann das Auto verlassen.

Nachteilig an diesen bekannten mechanischen Systemen ist allerdings, dass die Tür nur in einer gewissen Anzahl definierter Winkelstellungen fixiert ist. Wenn gerade weniger oder auch mehr Platz zur Verfügung steht, gibt es gegebenenfalls keine passende Einstellung. Außerdem wird die Tür nur relativ schwach fixiert und kann mit etwas mehr Kraft weiter geöffnet werden, was gegebenenfalls nachteilig ist, wenn sich relativ dicht neben der Tür ein weiteres Kraftfahrzeug befindet, welches nicht beschädigt werden soll.

Es sind auch Systeme bekannt geworden, die beispielsweise über eine magnetorheologische Bremse verfügen und bei denen eine elektrische Spule ein Magnetfeld erzeugt, um die gewünschte Dämpfung zu erzielen. Damit kann die Tür ausreichend stark fixiert werden, um beispielsweise eine Ausstiegshilfe zu Verfügung zu stellen. Um die nötige Bremskraft aufzubringen, ist das System aber groß und schwer und teuer, sodass es sich nicht durchgesetzt hat.

Die DE 195 14 610 A1 offenbart einen Antrieb zum Öffnen und/oder Schließen eines Flügels, einer Tür, eines Fensters oder dgl. und umfasst eine elektrorheologischen oder magnetorheologischen Dämpfer und eine Feder oder einen Motor als Antrieb. Ein aktives Öffnen oder Schließen ist möglich. Durch ein elektrischer oder magnetisches Feld wird die Dämpfung beim Schließen oder Öffnen eingestellt.

Die DE 10 2004 061 687 A1 zeigt eine Fahrzeugtür mit einer Abbremsfunktion. Es geht darum, Beschädigungen zu vermeiden, die bei einem unachtsamen Öffnen von Fahrzeugtüren bei einer Kollision mit Hindernissen auftreten können. Es soll ein möglichst kleiner Bremsbereich zur Verfügung gestellt werden. Das wird dadurch gelöst, dass an einer Zielposition eine Geschwindigkeit der Fahrzeugtür den Wert Null erreicht. Eine aktive Stelleinheit wie ein Motor kann umfasst sein.

Es sind auch aktive Systeme bekannt geworden, bei denen die Tür grundsätzlich in einer beliebigen Position abgebremst oder fixiert werden kann. Ein Nachteil von beispielsweise mit einer Spindel und einem Elektromotor betätigten Systemen ist aber, dass diese relativ viel Zeit zum Öffnen oder Schließen der Türe benötigen und dabei laut sind. Derartig langsame Öffnungs- und insbesondere Schließvorgänge werden vom Benutzer nicht akzeptiert.

Es ist deshalb die Aufgabe der vorliegenden Erfindung, eine verbesserte Türkomponente zur Verfügung zu stellen.

Diese Aufgabe wird gelöst durch eine Türkomponente mit den Merkmalen des Anspruchs 1. Bevorzugte Weiterbildungen der Erfindung sind Gegenstand der Unteransprüche. Bevorzugte Merkmale, Weiterbildungen und Ausgestaltungen werden in der allgemeinen Beschreibung und der Beschreibung der Ausführungsbeispiele erläutert.

Eine erfindungsgemäße Türkomponente umfasst eine Dämpfereinrichtung mit zwei relativ zueinander bewegbaren Anschlusseinheiten zur Dämpfung einer Türbewegung einer Tür insbesondere eines Kraftfahrzeugs. Die Dämpfereinrichtung enthält ein magnetorheologisches Fluid als Arbeitsfluid und umfasst eine Zylindereinheit mit einer ersten Kammer und einer zweiten Kammer, wobei die beiden Kammern durch eine mit einem Dämpfungsventil ausgerüstete Kolbeneinheit voneinander getrennt sind. Die Dämpfereinrichtung umfasst eine zur Kopplung mit einer Antriebseinrichtung ausgebildete Anschlusseinrichtung. Die Dämpfereinrichtung (und damit die Türkomponente) ist mittels der koppelbaren Antriebseinrichtung aktiv wenigstens von einer ersten Stellung in eine zweite Stellung bewegbar. Eine Bewegung der Kolbeneinheit ist durch die Antriebseinrichtung unterstützbar, sodass unabhängig von der Ausrichtung des Fahrzeugs die gleiche Betätigungskraft zur Bewegung der Kolbeneinheit aufgebracht werden muss.

Insbesondere umfasst eine erfindungsgemäße Türkomponente wenigstens eine Dämpfereinrichtung mit zwei relativ zueinander bewegbaren Anschlusseinheiten zur Dämpfung einer Türbewegung einer Tür eines Fahrzeugs. Die Dämpfereinrichtung enthält ein magnetorheologisches Fluid als Arbeitsfluid und eine Zylindereinheit mit einer ersten Kammer und einer zweiten Kammer. Die beiden Kammern sind durch eine mit wenigstens einem Dämpfungsventil ausgerüstete Kolbeneinheit voneinander getrennt. Die Kolbeneinheit ist wenigstens von einer ersten Stellung in wenigstens eine zweite Stellung überführbar bzw. von einer ersten Stellung relativ zu der Zylindereinheit in eine zweite Stellung relativ zu der Zylindereinheit bewegbar. Die Dämpfereinrichtung umfasst eine zur Kopplung mit einer Antriebseinrichtung ausgebildete Anschlusseinrichtung. Eine Bewegung der Kolbeneinheit relativ zu der Zylindereinheit ist mittels der koppelbaren Antriebseinrichtung aktiv wenigstens von der ersten Stellung in die zweite Stellung unterstützbar.

Die erfindungsgemäße Türkomponente hat viele Vorteile. Ein erheblicher Vorteil der erfindungsgemäßen Türkomponente besteht darin, dass die Dämpfereinrichtung aktiv unterstützt wenigstens zwischen einer ersten Stellung und einer zweiten Stellung bewegbar ist. Weiterhin ist die erfindungsgemäße Türkomponente mit einem magnetorheologischen Fluid als Arbeitsfluid ausgerüstet und kann deshalb eine starke Bremskraft aufbringen, sodass die Tür in beliebigen Stellungen so fixiert werden kann, dass die Türe als Ausstiegshilfe verwendet werden kann.

Die Dämpfereinrichtung bzw. die Kolbeneinheit der Dämpfereinrichtung kann aktiv unterstützt bewegt werden. Das bedeutet, dass die Kolbeneinheit relativ zu der Zylindereinheit gesteuert verfahren werden kann oder aber, dass eine Bewegung der Kolbeneinheit unterstützt wird, um die nötige Kraft definiert

einzustellen oder um die Bewegung gezielt zu unterstützen. Eine automatische Bewegung erfolgt dann (zunächst erstmal) nicht.

Aktiv (unterstützt) im Sinne der vorliegenden Erfindung bedeutet steuerbar oder gesteuert (unterstützt). Mittels einer Antriebseinrichtung aktiv von einer ersten Stellung in eine zweite Stellung bewegbar bedeutet, dass die Antriebseinrichtung die Dämpfereinrichtung und insbesondere eine Tür oder dergleichen von einer ersten Stellung in die zweite Stellung überführen kann. Der Benutzer muss nicht die (ganze) Kraft zur Bewegung der Tür aufbringen. Die ganze Kraft oder der überwiegende Teil der benötigten Kraft (insbesondere >30% oder >50% oder >80%, vorzugsweise >95% der benötigten Kraft) wird durch die Antriebseinrichtung aufgebracht.

Es ist möglich und bevorzugt, dass die zur Bewegung der Tür und insbesondere der Kolbeneinheit benötigte Kraft gezielt eingestellt wird. Insbesondere wird die zur Bewegung der Kolbeneinheit bzw. Tür von dem Benutzer benötigte Kraft (im Folgenden "Betätigungskraft" genannt), gesteuert und/oder in vordefinierten oder wählbaren Grenzen eingestellt oder geregelt. Die Betätigungskraft wird dabei unabhängig von den (sich ändernden) äußeren Bedingungen immer gleich eingestellt. So kann die Betätigungskraft bei einer Schräglage am Hang genau gleich eingestellt werden wie auf einer Ebene. Es ist möglich, dass wenigstens ein Lagesensor vorgesehen ist, der eine Orientierung relativ zur Horizontalen erfasst. Es kann auch eine aktuelle Windlast in Öffnungs- und/oder Schließrichtung berücksichtigt werden.

Die Antriebseinrichtung wird vorzugsweise von der Steuereinrichtung so gesteuert, dass bei der aktiv unterstützten Variante immer eine (nahezu) gleiche Betätigungskraft aufgebracht werden muss, um die Tür zu öffnen und/oder zu schließen. Die Betätigungskraft beim Öffnen (und/oder Schließen) wird vorzugsweise in einem Bereich von +/-50% und insbesondere von +/-25% und vorzugsweise von +/-10% oder besser eingestellt. Der Benutzer hat dann immer den gleichen Aufwand, die Tür zu öffnen (oder zu schließen), unabhängig davon, ob das Auto am Hang steht und die Tür sich normalerweise selbst öffnen würde oder ob die Tür von selbst zufallen würde, weil die Tür gegen die Schwerkraft geöffnet (geschlossen) werden muss. Zur Bestimmung der nötigen Unterstützung kann die durch äußere Bedingungen einwirkende Kraft durchgängig oder periodisch ermittelt werden. Mit einer über einen Stellungssensor bekannten Position der Kolbeneinheit (oder der Tür) kann die zur Bewegung nötige Bewegungskraft aus einem Speicher abgefragt und die Bewegungskraft ermittelt und daraus dann die nötige Unterstützungskraft abgeleitet werden, um die angestrebte Betätigungskraft zu erhalten. Die Unterstützungskraft kann positiv oder negativ sein. Das bedeutet, dass die Türbewegung bei einer Schräglage gebremst oder aktiv unterstützt werden kann.

Die Höhe der Betätigungskraft kann einstellbar sein. Möglich sind z. B. 10 N oder 20 N oder 30 N oder 50 N oder 60 N am Türgriff oder ein anderer geeigneter Wert.

Bei Ausgestaltungen, bei denen eine vorgegebene Bewegungskraft eingestellt wird, findet ein automatisches Öffnen oder Schließen regelmäßig nicht statt. Es ist aber auch dann möglich, eine automatische Bewegung der Tür z. B. auf Wunsch oder bei Aktivierung eines Schalters oder einer Bedienfläche etc. durchzuführen. So kann eine regelmäßig gleiche Betätigungskraft eingestellt werden und auf Wunsch die Tür automatisch geöffnet oder geschlossen werden.

Unter einer Tür im Sinne der vorliegenden Erfindung wird auch eine Heckklappe oder sonstige Klappe zur Verschließung eines Stauraums oder dergleichen angesehen. Der Begriff Türbewegung umfasst deshalb im Sinne der vorliegenden Erfindung auch eine Klappenbewegung oder eine Motorhauben- oder Heckklappenbewegung. Insbesondere ist die Dämpfereinrichtung als Lineardämpfer ausgeführt. Vorzugsweise sind eine der beiden Anschlusseinheiten mit einer Tragkonstruktion und die andere der beiden Anschlusseinheiten mit einer bewegbaren Türeinrichtung insbesondere eines Kraftfahrzeugs verbindbar. In bevorzugten Ausgestaltungen ist die erste Stellung eine Schließstellung und die zweite Stellung einer Öffnungsstellung. Möglich ist es aber auch, dass die erste Stellung eine leicht geöffnete Stellung ist und die zweite Stellung eine weiter geöffnete Stellung definiert.

Besonders bevorzugt kann eine Tür oder dergleichen aktiv geöffnet werden.

Vorzugsweise ist die Dämpfereinrichtung aktiv (unterstützt) von der zweiten Stellung in die erste Stellung bewegbar. Insbesondere ist die Dämpfereinrichtung aktiv von der zweiten Stellung in die erste Stellung mittels der koppelbaren Antriebseinrichtung bewegbar. Es ist bevorzugt, dass die Dämpfereinrichtung mit der Antriebseinrichtung aktiv wenigstens teilweise zwischen der ersten und der zweiten Stellung hin und her bewegbar ist. Vorzugsweise ist eine Tür sowohl in die Öffnungs- als auch in die Schließrichtung bewegbar. Es ist möglich und bevorzugt, dass die Dämpfereinrichtung aktiv nicht vollständig in die erste Stellung bewegt wird, um ein Einklemmen zu verhindern. Dann kann es möglich sein, dass der Benutzer für die vollständige Schließung der Tür noch ein Signal ausgeben muss oder dass die Schließung langsamer erfolgt oder dass der Benutzer die Tür selbst erst vollständig schließt.

In bevorzugten Ausgestaltungen umfasst die Dämpfereinrichtung eine Luftkammer, die in Wirkverbindung mit der Kolbeneinheit steht. Insbesondere umfasst die Anschlusseinrichtung wenigstens einen Fluidanschluss an der Luftkammer. Ein Fluidanschluss an einer Luftkammer ermöglicht viele Möglichkeiten, da über den Fluidanschluss der Luftdruck in der Luftkammer veränderbar ist. Da die Luftkammer in Wirkverbindung mit der Kolbeneinheit steht, kann somit auf einfache Art und Weise die Dämpfereinrichtung aktiv, leise und schnell von der ersten in die zweite Stellung bewegt werden und gegebenenfalls auch aktiv wieder von der zweiten Stellung in die erste Stellung zurück überführt werden.

Die Luftkammer kann insbesondere als Ausgleichskammer für ein in die Zylindereinheit eintauchendes Volumen einer Kolbenstange der Kolbeneinheit ausgebildet sein. In bestimmten bevorzugten Ausgestaltungen besteht die Kolbeneinheit im Wesentlichen oder wenigstens zu einem wesentlichen Teil aus dem Kolben und einer daran angeschlossenen Kolbenstange, die sich aus der Zylindereinheit heraus nach draußen erstreckt. Der in der Zylindereinheit angeordnete Kolben teilt das Volumen (oder einen erheblichen oder den größten Volumenanteil) der Zylindereinheit in eine erste Kammer und eine zweite Kammer. Verläuft die Kolbenstange beispielsweise durch die erste Kammer, so nimmt bei eintauchender Kolbenstange dessen durch die Kolbenstange eingenommenes Volumen zu. Die Ausgleichskammer kann über den Trennkolben an die zweite Kammer grenzen. Taucht nun die Kolbenstange weiter in die Zylindereinheit ein, so wird das Volumen der Ausgleichskammer und somit der Luftkammer komprimiert.

Wird die Luftkammer über die Anschlusseinrichtung unter einen höheren Druck gesetzt, so wird eine Kraft auf den Kolben der Kolbeneinheit erzeugt, die die Kolbeneinheit in die ausgefahrene Richtung drängt. Dadurch kann ein automatisches Öffnen einer Tür realisiert werden. Soll nun an einer bestimmten Winkelposition die Tür fixiert werden, kann das Dämpfungsventil mit einem Magnetfeld beaufschlagt werden, sodass der darin angeordnete Strömungskanal für das magnetorheologische Fluid mit einem Magnetfeld beaufschlagt wird, wodurch eine ausreichend starke Abbremsung einer Bewegung der beiden Anschlusseinheiten zueinander aufgebracht werden kann. Die aufbringbare Brems- oder Haltekraft reicht auch aus, um die Dämpfereinrichtung bzw. eine Tür als Ausstiegshilfe zu fixieren. Wenn eine Tür als Ausstiegshilfe fixiert wird, kann sich ein Insasse mit seinem vollen Gewicht daran festhalten und aus dem Auto herausziehen, ohne dass sich die Tür weiter öffnet. Dadurch können Beschädigungen der Tür und/oder von benachbarten Kraftfahrzeugen oder Gegenständen weitestgehend verhindert werden.

Durch ein nachfolgendes Ablassen des Druckes aus der Luftkammer kann die Kraft zum Ausfahren der Kolbenstange entsprechend reduziert werden. Wird die Kolbenstange durch eine andere Luftfeder oder durch eine anders gestaltete Feder wie eine Spiralfeder oder dergleichen in die eingefahrene Stellung vorbelastet, so kann auch eine aktive Überführung der Tür oder Klappe oder dgl. bzw. der Dämpfereinrichtung von der zweiten Stellung in die erste Stellung erfolgen.

Die Ausgleichskammer ist vorzugsweise durch einen Ausgleichskolben von der ersten oder der zweiten Kammer getrennt.

In bevorzugten Ausgestaltungen ist der Dämpfereinrichtung eine Pumpe und/oder ein steuerbares Ventil zugeordnet. Die Pumpe und/oder das steuerbare Ventil sind vorzugsweise mit der Anschlusseinrichtung verbunden. Darüber kann der Druck in der Luftkammer erhöht oder verringert werden.

Vorzugsweise ist der Dämpfereinrichtung wenigstens ein Druckspeicher zugeordnet. Ein derartiger Druckspeicher dient hier als Energiespeicher, sodass eine Öffnung der Tür bzw. eine Überführung der Dämpfereinrichtung zwischen der ersten Stellung und der zweiten Stellung bzw. zwischen der zweiten Stellung und der ersten Stellung auch durch das in dem Druckspeicher gespeicherte Gasvolumen angetrieben werden kann. Besonders bevorzugt ist der Druckspeicher durch das Fahrzeug aufladbar. Der Druckspeicher kann an dem Fahrzeug vorgesehen sein und durch die Bordaggregate auf einem definierten Druckniveau oder in einem bestimmten Druckbereich gehalten werden. Möglichst es auch, dass der Türkomponente direkt ein Druckspeicher zugeordnet oder darin enthalten ist und dass dieser Druckspeicher durch eine in der Türkomponente vorhandene oder der Türkomponente zugeordnete Pumpe (Kompressor) aufgeladen wird.

In allen Ausgestaltungen ist es möglich und bevorzugt, dass die Dämpfereinrichtung durch wenigstens eine Federeinrichtung in eine der beiden Stellungen vorbelastet ist. Möglich ist es auch, dass zwei oder mehr unterschiedliche Federeinrichtungen vorgesehen sind, die die Dämpfereinrichtung in unterschiedliche Richtungen vorbelasten. So kann beispielsweise in der ersten Stellung eine Vorbelastung in Richtung der zweiten Stellung erfolgen und in der zweiten Stellung kann eine Vorbelastung der Dämpfereinrichtung in Richtung der ersten Stellung wirken.

Vorzugsweise ist die Dämpfereinrichtung mit der Antriebseinrichtung entgegen einer Federkraft der Federeinrichtung in Richtung der anderen Stellung bewegbar. Besonders bevorzugt ist die Dämpfereinrichtung mit der Antriebseinrichtung von der ersten Stellung in die zweite Stellung und auch von der zweiten Stellung in die ersten Stellung überführbar.

In allen Ausgestaltungen und Weiterbildungen ist es möglich, dass die Anschlusseinrichtung wenigstens eine als Motor ausgebildete Antriebseinrichtung umfasst oder dass der Anschlusseinrichtung eine als Motor ausgebildete Einrichtung zugeordnet ist. Ein solcher Motor kann insbesondere elektrisch antreibbar sein. Möglich und bevorzugt ist es auch, dass der Motor hydraulisch oder pneumatisch oder piezoelektrisch antreibbar ist. Möglich ist es auch, dass ein magnetischer Antrieb vorhanden ist.

Ein elektrischer Motor kann beispielsweise zum Antrieb einer Pumpe oder eines Verdichters dienen. Möglich ist es auch, dass ein elektrischer Motor auf eine Spindel einwirkt, die beispielsweise einen Stellkolben verstellt und somit beispielsweise auf den Druck in der Luftkammer einwirkt.

Es ist bevorzugt, dass der Motor über einen Umsetzer mit der Dämpfereinrichtung gekoppelt ist. Dabei kann der Umsetzer insbesondere eine Drehbewegung des Motors in eine Längsbewegung der Dämpfereinrichtung umwandeln.

In einer einfachen Ausgestaltung umfasst der Umsetzer eine Zahnstange und ein damit kämmendes Zahnrad. Möglich ist es auch, dass der Umsetzer einen Riemen oder eine Kette oder dergleichen umfasst.

Möglich ist es auch, das hydraulisch auf eine Stellkolben eingewirkt wird, um den Druck in der Luftkammer zu verändern. Es kann auch Hydraulikfluid in ein flexibles Element geleitet (oder daraus abgepumpt) werden, um den Luftdruck in der Luftkammer zu verändern. Beispielsweise kann ein flexibles Element wie ein Gummibalg in der Luftkammer angeordnet sein oder daran angrenzen oder damit verbunden sein. Dann bewirkt eine Volumenänderung des Gummibalges eine Volumenänderung der Luftkammer und somit eine Druckänderung in der Luftkammer. Die Anschlusseinrichtung stellt dann wenigstens einen Hydraulikanschluss zur Verfügung. Die Versorgung mit dem Hydraulikfluid kann zentral über das Kraftfahrzeug erfolgen. Als Antriebseinrichtung kann das Hydraulikaggregat des Kraftfahrzeuges dienen.

Die Antriebseinrichtung kann auch einen Hubmagneten aufweisen. Über einen solchen Magneten kann ebenfalls ein Abstand an der Dämpfereinrichtung beeinflusst oder eingestellt werden. Darüber kann eine aktive Überführung der Dämpfereinrichtung von der ersten Stellung in die zweite Stellung oder umgekehrt durchgeführt werden. Auch hier ist es möglich, dass ein aktivierter Hubmagnet das Volumen der Luftkammer oder einer Luftkammer und somit den darin herrschenden Innendruck beeinflusst, um ein Öffnen und/oder ein Schließen einer Tür des Kraftfahrzeugs zu bewirken.

Ein Hubmagnet kann ein Paar zusammenwirkender Magneteinheiten aufweisen, wobei eine Magneteinheit mit der Kolbeneinheit und die andere Magneteinheit beispielsweise mit der Zylindereinheit verbunden ist. Dabei können eine erste der beiden Magneteinheiten als Elektromagnet und die zweite Magneteinheit als Dauermagnet oder als Elektromagnet ausgeführt sein oder aus magnetischem Material bestehen. Wenn der Elektromagnet mit Strom beaufschlagt wird, zieht er das magnetische Material an. Wird als magnetisches Material ein Dauermagnet eingesetzt, so kann je nach Polung eine Anziehungskraft oder eine Abstoßungskraft realisiert werden, womit ein größerer Hub ermöglicht wird.

In allen Ausgestaltungen ist es möglich, dass der Motor mit einer Kolbenstange der Dämpfereinrichtung gekoppelt ist.

Vorzugsweise umfasst die Dämpfereinrichtung bzw. das Dämpfungsventil der Dämpfereinrichtung wenigstens einen von einer magnetorheologischen Flüssigkeit durchströmbaren Strömungskanal, wobei der Strömungskanal einem veränderbaren Magnetfeld einer Magnetfeldquelle aussetzbar ist. Durch Erzeugung eines entsprechenden Magnetfeldes kann der Strömungswiderstand des Strömungskanals verändert werden und somit kann eine Dämpfung der Dämpfereinrichtung über das Magnetfeld in dem Strömungskanal beeinflusst und eingestellt werden.

Die Erfindung stellt eine Türkomponente für Kraftfahrzeuge zur Verfügung, bei der die Tür schnell und leise mit einer harmonischen Bewegung geöffnet werden kann. Zudem kann die Tür an verschiedenen (seitlichen) Hindernissen mit unterschiedlichsten Abständen gestoppt werden. Die Stoppfunktion wird über eine magnetorheologische Dämpfereinrichtung realisiert, die sich im stromlosen Zustand (z. B. bei einem Unfall) problemlos öffnen lässt. Im geschlossenen Zustand bzw. in der geschlossenen Stellung wird das Dämpfungsventil vorzugsweise nicht bestromt. In der geschlossenen Stellung wird die Tür bzw. Türkomponente vorzugsweise durch eine Verriegelung gehalten. Die Verriegelung kann durch Betätigung des Türschlosses oder z. B. elektrisch entriegelt werden.

Mechanisch kann eine solche Dämpfereinrichtung einen Luft- oder gasbeaufschlagtem Trennkolben zum Ausgleich des Kolbenstangenvolumens aufweisen. Durch die Vorspannung der Kolbenstange durch das durch den Trennkolben abgeteilte Ausgleichsvolumen einer Ausgleichskammer (kann auch direkt eine Luftkammer sein) fährt die Kolbenstange mit einer durch den Druck der Ausgleichskammer definierten Kraft selbstständig aus. Abhängig von dem Vorspanndruck (Luftdruck in der z. B. als Ausgleichskammer ausgebildeten Luftkammer) und abhängig von der Türkinematik öffnet sich die Tür damit selbstständig, wenn die Dämpfereinrichtung bzw. das Dämpfungsventil der Dämpfereinrichtung nicht mit einem Magnetfeld beaufschlagt wird (und entriegelt wird oder ist). Beim Öffnen der Türe kann die Öffnungsgeschwindigkeit über eine Stromvorgabe des Dämpfungsventils angepasst werden. Außerdem kann die Tür in jeder beliebigen Winkelstellung durch Aufbringung eines entsprechend hohen Magnetfeldes vollständig zum Stillstand gebracht und dort fixiert werden.

Das System bzw. die Lage des Trennkolbens kann auch umgekehrt montiert werden, sodass die Kolbenstange selbstständig einfährt. In Abhängigkeit von dem Vorspanndruck in der als Ausgleichskammer ausgeführten Luftkammer kann eine entsprechende Dämpfkraft beim Öffnen der Tür erzeugt werden.

In einer anderen Variante wird für die Dämpfereinrichtung ein Einwegkreislauf für das magnetorheologische Fluid vorgesehen. Bei einer solchen Ausgestaltung liegt die Ausgleichskammer mit dem Ausgleichsvolumen für eine in die Zylindereinheit eintauchende Kolbenstange sowohl beim Öffnen als auch beim Schließen auf der Niederdruckseite, sodass nur eine geringe Vorspannkraft anliegt. Dann kann die volle Dämpfkraft in beide Bewegungsrichtungen (Zug- und Druckseite bzw. Öffnen und Schließen) erzeugt werden. Durch eine gezielte Erhöhung des Luftdrucks in der Luftkammer (und/oder Ausgleichskammer) kann ein Ausfahren (und Einfahren) realisiert werden. Dazu kann der Druck entsprechend angepasst werden. In allen Ausgestaltungen kann die Ausgleichskammer direkt als Luftkammer dienen. Über Luftzufuhr zu der Luftkammer oder Luftabfuhr aus der Luftkammer kann der Luftdruck in der Ausgleichskammer eingestellt werden. Es ist auch möglich, dass die Ausgleichskammer und die Luftkammer als separate Kammern ausgebildet sind und über eine bewegbare Wand (flexible Wand oder auch Stellkolben) oder dergleichen miteinander in Wechselwirkung stehen.

Es kann ein selbstständiges Öffnen der Türkomponente realisiert werden, während gleichzeitig ein manuelles Schließen oder ein automatisches Schließen erfolgt.

In einer bevorzugten Ausgestaltung kann die Tür selbstständig öffnen und wird von Hand geschlossen. Dabei ist mit einer Kraftdifferenz zu rechnen, da zum schnellen Öffnen (möglicherweise in einer leichten Schräglage) mehr Kraft benötigt wird, als vom Anwender beim Schließen ohne Mühe aufgebracht wird. Je kleiner die Schließkraft wird, desto angenehmer ist der Schließvorgang, aber desto größer ist auch die Kraftdifferenz.

Diese Kraftdifferenz wird vorzugsweise durch die Antriebseinrichtung zur Verfügung gestellt. Die Kraftdifferenz muss nicht in Echtzeit bei Bedarf erzeugt werden, sondern kann zwischengespeichert und nur bei Bedarf abgerufen werden. Als Energiespeicher kann beispielsweise Luft in der Luftkammer oder auch eine mechanische Feder dienen. Das hat Vorteile, da der Aktor kleiner ausfallen kann. Außerdem sind die Systeme mechanisch entkoppelt bzw. sind über ein weiches Element wie eine Feder gekoppelt.

Es stellt einen Komfortvorteil dar, wenn der Benutzer nicht seitlich von der Tür stehend diese öffnen muss, sondern wenn die Tür schon vorgeöffnet ist und er quasi direkt einsteigen kann.

In allen Ausgestaltungen können Nahfeldsensoren vorgesehen sein, die die Umgebung erkennen und den Öffnungswinkel der Tür so begrenzen, dass die Gefahr einer Kollision minimiert wird. Kollisionen können vollständig verhindert werden.

In allen Ausgestaltungen können Sensoren vorgesehen sein, die einen Gegenstand zwischen der Tür und der Karosserie beim Schließen erkennen und den Öffnungswinkel der Tür so begrenzen, dass die Gefahr einer Quetschung/Verletzung/Beschädigung minimiert wird.

Gemäß einer weiteren Variante umfasst die Dämpfereinrichtung eine durchgehende Kolbenstange, die sich durch die erste Kammer und durch die zweite Kammer hindurch erstreckt. An die erste Kammer und/oder an die zweite Kammer kann sich dann (wenigstens) eine Luftkammer anschließen (oder jeweils eine Luftkammer an den beiden Enden), in die beispielsweise eine (oder jeweils eine) der Kolbenstangen hineinragt. Dadurch, dass die Kolbenstange vollständig durch die erste Kammer und die zweite Kammer durchtritt, ist das System grundsätzlich zunächst kraftlos. Nun ragt die Kolbenstange etwas in die Luftkammer hinein, sodass beim weiteren Einfahren der Kolbenstange in die Luftkammer die dort vorhandene Luft durch das eintretende Volumen der Kolbenstange komprimiert wird, sodass eine Rückstellkraft anliegt.

Bei einer solchen Variante erfolgt beim Einfahren der Dämpfereinrichtung bzw. beim Schließen der Tür eine Vorspannung der Luftkammer, sodass ein automatisches Öffnen der Tür ermöglicht wird. Möglich ist es auch, dass die Bewegung in die eine oder andere Richtung durch eine mechanische Feder wie eine Spiralfeder oder eine Tellerfeder oder dergleichen mehr unterstützt wird. Möglich ist es auch, dass in (wenigstens) eine Bewegungsrichtung eine Luftfeder in Form einer Luftkammer vorgesehen ist und dass in die andere Bewegungsrichtung eine mechanische Feder oder auch eine Luftkammer vorhanden ist. Durch eine Variation des Luftdrucks in der Luftkammer (oder beiden Luftkammern, wenn an beiden Enden jeweils eine vorhanden ist), kann die Federstärke der Luftfeder(n) variiert werden, sodass durch einfache Variation des Luftdrucks in der Luftkammer (den Luftkammern) sowohl ein Einfahren als auch ein Ausfahren der Dämpfereinrichtung ermöglicht wird.

In allen Ausgestaltungen ist es möglich, dass zur Erleichterung eines kraftintensiven Einfahrens der Dämpfereinrichtung (Schließen der Tür) der Luftdruck in der Luftkammer nach dem Öffnen der Tür auf einen niedrigen Druck abgesenkt wird. Dadurch wird anschließend ein komfortables Schließen der Tür mit wenig Kraft oder sogar ein automatisches Schließen der Tür ermöglicht. Nachdem Schließen der Tür bzw. dem Überführen der Dämpfereinrichtung in die erste Stellung kann das Druckniveau in der Luftkammer der Dämpfereinrichtung wieder mit einer Pumpe bzw. einem Verdichter auf das Ausgangsniveau gebracht werden. Danach ist ein anschließendes Komfortöffnen wieder möglich. In verschiedenen Ausgestaltungen ist es auch möglich, die Grundrückstellkraft mit einer mechanischen Feder zu realisieren, wobei dann die Pumpe mit einem niedrigeren Druck betrieben werden kann.

In anderen Ausgestaltungen ist es auch möglich, einen Kraftimpuls bzw. eine Kraft durch einen Magneten in das System einzubringen. Dann kann die Dämpfereinrichtung beispielsweise in die zweite Stellung (Öffnungsstellung) überführt werden, wenn ein Hubmagnet aktiviert wird und eine Überführung der Dämpfereinrichtung in die zweite Stellung unterstützt.

In anderen Ausgestaltungen ist es wiederum möglich, über beispielsweise einen Stellkolben oder dergleichen ein Volumen der Luftkammer zu variieren, sodass der Druck innerhalb der Luftkammer entsprechend verändert wird. Ein solcher Stellkolben kann beispielsweise über einen Motor mit einem Spindeltrieb schnell und einfach verfahren werden. So können unterschiedliche Drücke in der Luftkammer bzw. der Ausgleichskammer erzeugt werden, wodurch entsprechende Kräfte erzeugbar sind.

Weitere Vorteile und Merkmale der vorliegenden Erfindung ergeben sich aus den Ausführungsbeispielen, die mit Bezug auf die beiliegenden Figuren im Folgenden erläutert werden.

In den Figuren zeigen:
- Figur 1: eine schematische Draufsicht auf ein Kraftfahrzeug mit einer erfindungsgemäßen Türkomponente;
- Figur 2: eine schematische Explosionsdarstellung der Türkomponente nach Figur 1;
- Figur 3: einen vergrößerten Querschnitt der Türkomponente nach Figur 1;
- Figur 4: eine andere Ausgestaltung einer erfindungsgemäßen Türkomponente;
- Figur 5: noch eine Ausgestaltung einer erfindungsgemäßen Türkomponente;
- Figur 6: eine Variante der Türkomponente nach Figur 5;
- Figur 7: eine Variante der Türkomponente nach Figur 6; und
- Figur 8: noch eine Variante der Türkomponente nach Figur 6.

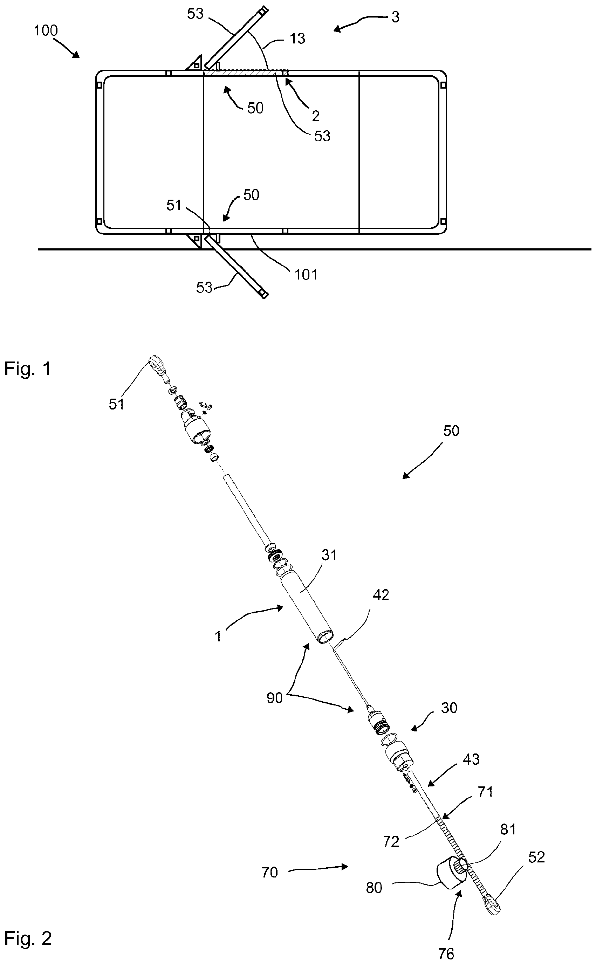

Figur 1 zeigt eine schematische Draufsicht auf ein an einem Straßenrand haltendes Kraftfahrzeug 100, bei dem hier zwei als Türen ausgeführte Türeinrichtungen 53 vorgesehen sind, die beide geöffnet sind. Die Türen 53 befinden sich jeweils etwa in einer Winkelstellung 13. Die Türen sind jeweils Teil einer Türkomponente 50, die hier die Türen 53 umfasst. Möglich ist es genauso, dass an die Türkomponente 50 eine Tür angebracht wird. Die Türkomponente 50 umfasst jedenfalls Anschlusseinheiten 51 und 52 (vgl. Fig. 2) zum Anschluss an der Tragkonstruktion 101 des Fahrzeugs 100 bzw. an der Tür 53, um die Tür schwenkbar an der Tragkonstruktion 101 aufzunehmen. Dabei kann die Tür aus mehreren jeweils schwenkbaren Einheiten bestehen, die miteinander gelenkig verbunden sind. Die Tür kann an einer oder zwei oder mehr Schwenkachsen schwenkbar aufgenommen sein. Schraffiert eingezeichnet ist eine Tür 53 in der Schließstellung 2, in der die Tür hier bündig mit dem Fahrzeug abschließt.

In Figur 2 ist in einer vergrößerten Darstellung eine Explosionsdarstellung der Türkomponente 50 abgebildet, wobei die Türkomponente 50 eine Dämpfereinrichtung 1 umfasst, die einen Dämpfer auf magnetorheologischer Basis aufweist.

Die Türkomponente 50 in Figur 2 weist Anschlusseinheiten 51 und 52 zur Verbindung mit der Tragkonstruktion 101 und der Tür 53 auf. Es ist eine definierte und gesteuerte Verschwenkung der Tür bei der Überführung von der in Figur 1 dargestellten Öffnungsstellung in die auch in Figur 1 angedeutete Schließstellung 2 möglich.

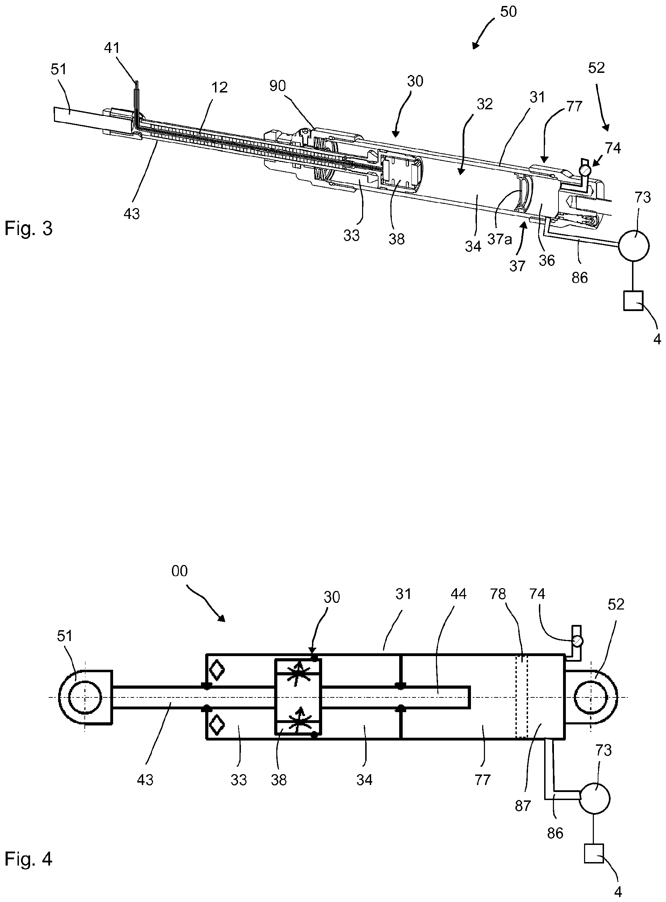

Die Dämpfereinrichtung 1 umfasst eine Kolben-Zylinder-Einheit 90 mit einer Zylindereinheit 31 und einer Kolbeneinheit 30. Der Kolben 38 der Kolbeneinheit 30 teilt das Zylindervolumen 32 variabel in eine erste Kammer 33 und eine zweite Kammer 34 (vgl. z. B. Figur 3) . Ein Ausgleichsvolumen 36 einer Ausgleichskammer 37 dient zum Ausgleich der in die Zylindereinheit 31 eintauchenden Kolbenstange 43.

Am Ende der Kolbenstange 43 ist eine Anschlusseinrichtung 71 ausgebildet. Die Anschlusseinrichtung 71 umfasst hier eine Verzahnung oder eine Zahnstange 72, die hier an der Kolbenstange 43 ausgebildet ist. Des Weiteren ist eine Antriebseinrichtung 70 vorgesehen, die hier einen elektrischen Motor 80 mit einem Zahnrad 81 umfasst. Das Zahnrad 81 kämmt mit der Zahnstange 72 an der Kolbenstange 43. Die Zähne der Zahnstange 72 beginnen in einem solchen Abstand von dem Kolben 38 der Kolbeneinheit, dass der gewünschte Hub ausgeführt werden kann. Insbesondere kann die Kolbenstange auch länger ausgebildet sein als in Figur 2 dargestellt, um einen ausreichenden Hub und eine ausreichende Länge der Zahnstange 72 zu ermöglichen.

Über die Antriebseinrichtung 70 kann durch die Steuereinrichtung 4 gesteuert die Kolbeneinheit 30 in die Dämpfereinrichtung 1 eingefahren oder entsprechend wieder ausgefahren werden. Das Zahnrad 81 und die Zahnstange 72 dienen als Getriebe, sodass der Motor 80 mit einer entsprechend hohen Drehgeschwindigkeit gedreht werden kann, um die gewünschte Bewegungsgeschwindigkeit zu erreichen.

Figur 3 zeigt eine vergrößerte Querschnittsdarstellung eines Teils der Türkomponente 50 aus Figur 2, wobei hier eine andere Antriebseinrichtung schematisch eingezeichnet ist, aber auch ein Antrieb an der Kolbenstange (oder an der Zylindereinheit 30) wie in Figur 2 implementiert sein kann.

An der in Figur 3 im Schnitt dargestellten Dämpfereinrichtung 1 ist an der Kolben-Zylinder-Einheit 90 die Kolbeneinheit 30 mit dem Kolben 38 zu erkennen, in dem die Magneteinrichtung 9 mit der elektrischen Spule 10 angeordnet ist. Der Kolben 38 teilt das Zylindervolumen 32 der Zylindereinheit 31 in eine erste Kammer 33 und eine zweite Kammer 34. Das Dämpfungsventil 5 ist an dem Kolben 38 angeordnet.

In der Zylindereinheit 31 ist die Ausgleichseinrichtung mit der Ausgleichskammer 37 und dem Ausgleichsvolumen 36 dargestellt. Die Ausgleichskammer 37 wird durch einen variabel innerhalb der Zylindereinheit 31 gleitenden Trennkolben bzw. Ausgleichskolben 37a von der zweiten Kammer 34 abgetrennt. Möglich ist es auch, die Ausgleichskammer 37 auf die andere Seite zu setzen, wobei dann eine Abdichtung gegenüber der durchlaufenden Kolbenstange und der ersten Kammer 33 erfolgen muss. Die Ausgleichskammer 37 ist mit einem gasförmigen Medium und hier mit Luft unter einem relativ geringen Druck gefüllt. Das eintauchende Volumen der Kolbenstange 43 kann ausgeglichen werden.

Hier ist die Ausgleichskammer 37 als Luftkammer 77 ausgebildet und verfügt des Weiteren über eine Luftleitung als Fluidleitung 86. Die Fluidleitung dient als Anschlusseinrichtung 71 bzw. ist Teil der Anschlusseinrichtung 71. Die Luftleitung führt zu einer Pumpe 73, die über einen Motor 80 angetrieben ist. Die Pumpe wird über die Steuereinrichtung 4 gesteuert. Über die Pumpe 73 kann der Innendruck in der Luftkammer 77 wahlweise erhöht werden, um ein Ausfahren der Kolbeneinheit 30 zu bewirken. Um von dem hohen Druck wieder auf einen niedrigeren Druck zu gelangen, ist ein schaltbares Ventil 74 vorgesehen, mit der Luft aus der Luftkammer 77 beispielsweise in die Umgebung oder einen (Zwischen-)Speicher abgelassen werden kann.

Das Dämpfungsventil 5 ist über Anschlusskabel 41 mit einer Stromversorgung und der Steuereinrichtung 4 verbunden.

Die Dämpfereinrichtung 1 aus den Figuren 2 oder 3 kann wahlweise aktiv über eine Einstellung des Drucks in der Luftkammer 77 verfahren werden. Möglich ist es auch, einen externen Motor vorzusehen, der beispielsweise über ein Zahnrad und eine Zahnstange die Dämpfereinrichtung aktiv ein- oder ausfährt.

Figur 4 zeigt eine Variante, bei der eine durchgehende Kolbenstange bzw. bei der zwei Kolbenstangen 43, 44 vorgesehen sind. Das Innere der Zylindereinheit 31 wird durch den Kolben 38 wieder in zwei Kammern 33 und 34 geteilt. Hier werden beide Kolbenstangen 43 und 44 an den jeweiligen Enden aus der ersten bzw. zweiten Kammer nach außen geführt. Während die erste Kolbenstange vollständig nach außen geführt wird, tritt die zweite Kolbenstange 44 hier in die Luftkammer 77 ein, sodass am Eintritt der Kolbenstange 44 in die Luftkammer 77 das für die Luft verfügbare Volumen reduziert und somit der Innendruck in der Luftkammer 77 erhöht wird. Durch die Pumpe 73 bzw. das Ventil 74 kann der Druck im Inneren der Luftkammer 77 wahlweise erhöht oder verringert werden, um ein gezieltes Ausfahren der Kolbeneinheit 30 bewirken zu können. Die Bereitstellung einer eigenen Luftkammer für "Aktiv" ermöglicht eine bessere Funktionsauslegung als z. B. bei der Konstruktion nach Fig. 3, wo die Luftkammer eine Doppelfunktion hat (Aktiv und Druckabstützung in Einfahrrichtung).

Gestrichelt eingezeichnet ist noch eine Variante mit einem Steuerkolben 78, der dann eine Steuerkammer 87 abtrennt, die über die Fluidleitung 86 mit Luft oder einem Hydraulikfluid beaufschlagt werden kann, um das Volumen der Luftkammer und den Druck in der Luftkammer einzustellen.

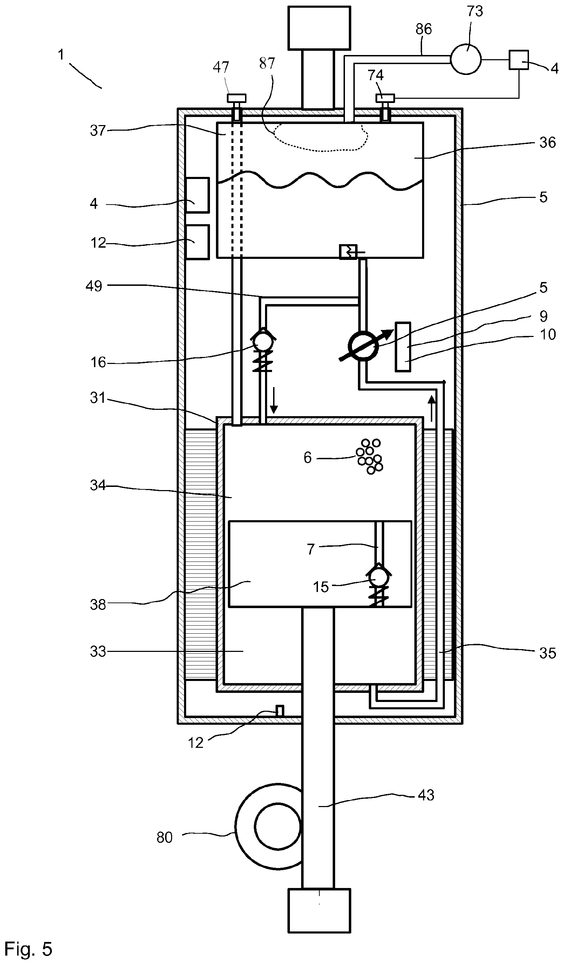

Figur 5 zeigt eine andere schematisch dargestellte Variante einer Dämpfereinrichtung 1 einer Türkomponente 50 mit Anschlusseinheiten 51 und 52. Die Dämpfereinrichtung weist ein magnetorheologisches Fluid 6 als Arbeitsfluid auf. Eine Kolbeneinheit 30 mit einem Kolben 38 trennt eine erste Kammer 33 von der zweiten Kammer 34. Durch den Kolben führt wenigstens ein Strömungskanal 7. An dem Strömungskanal 7 ist ein Einwegventil 15 vorgesehen, welches die Strömung des magnetorheologischen Fluids nur von der zweiten Kammer 34 aus in die erste Kammer 33 erlaubt. Von dort aus wird das Arbeitsfluid durch den Rückkanal 35 zu dem hier externen Dämpfungsventil 5 geleitet, dem eine Magneteinrichtung 9 und eine elektrische Spule 10 zugeordnet sind, um die gewünschte Dämpfung einzustellen. Das Dämpfungsventil 5 steht wiederum über eine Leitung 49 und ein zweites Einwegventil 16 mit der zweiten Kammer 34 in Strömungsverbindung. Sowohl beim Eintauchen der Kolbenstange 43 in die Zylindereinheit 31 als auch beim Austauchen der Kolbenstange 43 aus der Zylindereinheit 31 heraus strömt das Arbeitsfluid 6 in der gleichen Richtung entlang der eingezeichneten Pfeile. Je nachdem, ob die Kolbenstange eintaucht oder austaucht, wird magnetorheologisches Fluid der Ausgleichskammer 37 zugeleitet oder es wird magnetorheologisches Fluid aus der Ausgleichskammer 37 entnommen. In der Ausgleichskammer 7 30 ist ein Ausgleichsvolumen 36 vorgesehen, welches mit einem Gas gefüllt ist.

Eine oder mehrere Sensoreinrichtungen 12 können vorgesehen sein, um eine Relativposition der beiden Anschlusseinheiten 51 und 52 zueinander zu detektieren, um daraus eine Winkelstellung der Tür 53 abzuleiten. Möglich ist es in allen Ausgestaltungen aber auch, dass andere Winkelsensoren zum Beispiel am Drehgelenk vorgesehen sind, sodass direkt eine Winkelstellung ausgegeben wird.

Auch hier wird eine elektrische Spule 10 zur Erzeugung eines Magnetfeldes eingesetzt.

Der Motor 80 wirkt auf die Kolbenstange 43 ein. Dabei kann an der Kolbenstange 43 eine Verzahnung oder eine Zahnstange 72 ausgebildet sein, die mit einem Zahnrad 81 des Motors 80 kämmt. Hier kann auch das Ausgleichsvolumen 36 mit mehr oder weniger Druck beaufschlagt werden, wodurch sich aufgrund von Kolbenflächenunterschieden ein "aktives" Ausfahren (oder auch Einfahren, je nach Konstruktion) der Kolbenstange ergibt, so wie es auch mit Bezug auf die Ausführungsbeispiele nach den Figuren 3 und 4 beschrieben wurde. Die Luftleitung als Fluidleitung 86 dient dann als Anschlusseinrichtung 71 zum Anschluss an einen Verdichter 73 (der über einen Motor 80 angetrieben sein kann). Über das mit der Steuereinrichtung 4 steuerbare Ventil kann der Druck reduziert werden.

Gestrichelt eingezeichnet ist ein flexibler Balg als Steuerkammer 87, der über die Fluidleitung mit Luft oder einem Hydraulikfluid beaufschlagt werden kann. Durch Einleiten von Fluid wird das Volumen der Steuerkammer 87 vergrößert und durch Ableiten verkleinert, wodurch sich jeweils ein entsprechender Druck in der Ausgleichskammer 37 einstellt.

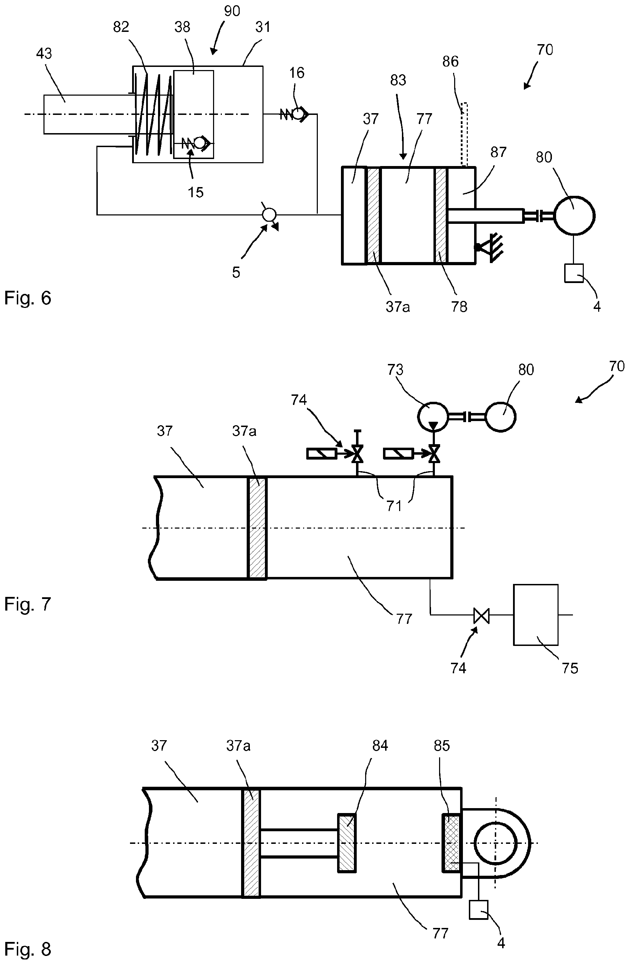

Figur 6 zeigt eine Variante der Dämpfereinrichtung 1 aus Figur 5 in einer schematischen Darstellung, wobei hier zusätzlich eine Federeinrichtung 82 eingezeichnet ist, die die Kolbeneinheit 30 in die eingefahrene Stellung vorbelastet. Des Weiteren ist an der Ausgleichskammer 37 ein Ausgleichskolben 37a eingezeichnet, der die Ausgleichskammer 37 von einer Luftkammer 77 trennt. Die Luftkammer 77 wird wiederum auf der andern Seite von einem Stellkolben 78 begrenzt. Der Stellkolben 78 kann über einen Hub-/Spindeltrieb und den elektrischen Motor 80 über die Steuereinrichtung 4 gesteuert verfahren werden, um den Stellkolben 78 weiter ein- oder auszufahren. Dadurch wird das Volumen der Luftkammer 77 variiert, die als Federeinrichtung 83 wirkt. Wird der Stellkolben 78 weiter eingefahren, so wird die Luftkammer 77 komprimiert und der Druck auf den Ausgleichskolben 37a erhöht, wodurch die Kraft der Federeinrichtung 82 überwunden werden kann und die Kolbeneinheit 30 aus der Zylindereinheit 31 ausgefahren werden kann. Wird umgekehrt das Volumen der Luftkammer 77 vergrößert, indem der Stellkolben 78 zurückgefahren wird, so wird der auf die Ausgleichskammer 37 wirkende Druck entsprechend verringert und die Kolbeneinheit 30 wird aus der ausgefahrenen Öffnungsstellung in die Schließstellung überführt.

In entsprechender Weise kann auch bei den anderen zuvor dargestellten Ausführungsbeispielen das Volumen der Luftkammer 77 variiert werden, um ein gezieltes Einfahren oder Ausfahren der Kolbenstange zu erreichen.

Gestrichelt eingezeichnet ist eine Fluidleitung 86, die hier als Hydraulikleitung dient und gegebenenfalls vorgesehen ist. In solchen Ausgestaltungen kann der Motor und die Spindel entfallen. Die Fluidleitung 86 kann mit einem (lokalen oder zentralen) Hydraulikaggregat verbunden sein und zur Zufuhr und Abfuhr von Hydraulikfluid zu der Steuerkammer 87 dienen. Über die Zufuhr und Abfuhr von Hydraulikfluid zu der Steuerkammer 87 kann die Stellung einer bewegbaren Wand wie z. B. des Stellkolbens 78 beeinflusst und damit der Druck in der Luftkammer eingestellt werden. In dieser und allen anderen Ausgestaltungen muss die Luftkammer nicht Luft enthalten, sondern kann irgendwelche Gase enthalten. Möglich ist es auch, dass das Hydraulikfluid in einen flexiblen Balg geleitet wird, der bei Zufuhr das Volumen in der Luftkammer verringert und damit den Luftdruck erhöht. Möglich ist es auch, dass die bewegbare Wand bzw. der Stellkolben auf eine Feder wie eine Spiralfeder einwirkt.

Figuren 7 und 8 zeigen Varianten, die grundsätzlich in allen vorausgegangenen Ausführungsbeispielen realisiert werden können. Dabei grenzt die Luftkammer 77 jeweils an den Ausgleichskolben 37a der Ausgleichskammer 37 an. In Figur 7 ist eine über einen elektrischen Motor 80 angetriebene Pumpe 73 über Fluidanschlüsse als Anschlusseinrichtung 71 mit der Luftkammer 77 verbunden. Über die Pumpe 73 kann der Luftdruck in der Luftkammer 77 entsprechend erhöht werden, während über das steuerbare Ventil 74 auch Luft nach außen abgelassen werden kann.

Figur 8 zeigt schließlich eine Variante, bei der ein magnetisches Material oder ein Dauermagnet 84 beispielsweise mit dem Ausgleichskolben 37a verbunden ist. Der Dauermagnet 84 wirkt mit einem Hubmagneten 85 zusammen, der hier an der Anschlusseinheit 52 angeordnet ist. Durch Aktivieren des Magnetfeldes des Hubmagneten 85 wird das magnetische Material oder der Dauermagnet 84 angezogen (oder abgestoßen). So kann eine verschleißarme Einstellung der ersten Stellung und der zweiten Stellung erfolgen.

Insgesamt stellt die Erfindung eine vorteilhafte Türkomponente zu Verfügung, bei der in jeder beliebigen Stellung ein Blockieren einer Tür ermöglicht wird. Gleichzeitig kann die Tür über eine Antriebseinrichtung 70 geöffnet und/oder geschlossen werden, wodurch der Komfort erhöht wird. Während des Öffnungs- oder Schließvorganges kann jederzeit zum Beispiel beim Erkennen eines Hindernisses der Bewegungsvorgang gestoppt werden, um Schäden oder Verletzungen zu vermeiden.

In allen Ausführungsbeispielen kann die zur Bewegung der Tür und insbesondere der Kolbeneinheit 30 benötigte Kraft gezielt eingestellt werden. Die von dem Benutzer benötigte Betätigungskraft wird dann gesteuert und in einem vordefinierten Bereich eingestellt. Die Betätigungskraft wird unabhängig von den sich ändernden äußeren Bedingungen immer gleich eingestellt. An einem Hang muss dann die gleiche Betätigungskraft aufgebracht werden wie bei Wind von vorn oder hinten. Zur Feststellung der Orientierung ist vorzugsweise ein Lagesensor vorgesehen, der eine Orientierung relativ zur Horizontalen in Längs- und Querrichtung erfasst. Sensoren können auch eine aktuelle Windlast berücksichtigen. Die Antriebseinrichtung wird dann von der Steuereinrichtung 4 so gesteuert, dass immer eine (nahezu) gleiche Betätigungskraft von dem Benutzer aufgebracht werden muss, um die Tür zu öffnen und/oder zu schließen. Die Steuerung/Regelung der Betätigungskraft kann auch nur beim Öffnen erfolgen. Beim Schließen kann die Bewegung so gedämpft werden, dass eine satte Schließung erfolgt. Der Benutzer hat dann beim Öffnen immer den gleichen Aufwand, egal, ob das Auto am Hang steht oder nicht. Die Unterstützungskraft kann positiv oder negativ sein, sodass eine Unterstütungs- oder Abbremsungskraft aufgebracht werden kann. Die vorliegende Erfindung kann auch für eine Heckklappe, eine Motorhaube oder eine Beladungsklappe an sonstigen Einrichtungen und insbesondere an Kraftfahrzeugen eingesetzt werden. Im Sinne der vorliegenden Erfindung sind auch solche Klappen oder Hauben Türkomponenten oder umfassen eine solche.

**Bezugszeichenliste:**

| | | | |
|---|---|---|---|
| 1 | Dämpfereinrichtung | 38 | Kolben |
| 2 | erste Stellung, Schließstellung | 39 | Ausgleichseinrichtung |
| 3 | zweite Stellung, Öffnungsstellung | 40 | elektrische Anschlusseinheit |
| 4 | Steuereinrichtung | 41 | Anschlusskabel |
| 5 | Dämpfungsventil | 42 | Schlitz |
| 6 | MRF | 43 | erste Kolbenstange |
| 7 | Strömungskanal | 44 | zweite Kolbenstange |
| 8 | Magnetfeld | 45 | Durchmesser von 43 |
| 9 | Magneteinrichtung | 46 | Rohr |
| 10 | elektrische Spule | 47 | Ventil |
| 11 | elektrische Spule | 48 | Ventil |
| 12 | Sensoreinrichtung | 49 | Leitung |
| 13 | Winkelstellung | 50 | Türkomponente |
| 14 | vorbestimmte Winkelposition | 51 | Anschlusseinheit |
| 15 | erstes Einwegventil | 52 | Anschlusseinheit |
| 16 | zweites Einwegventil | 53 | Tür |
| 18 | magnetischer Impuls | 54 | Winkelstellung |
| 19 | Zeitspanne | 60 | Hindernis |
| 20 | Änderungsgeschwindigkeit | 70 | Antriebseinrichtung |
| 21 | Verzögerung | 71 | Anschlusseinrichtung |
| 22 | Drehgeschwindigkeit | 72 | Zahnstange |
| 23 | Grenzwert von 20 | 73 | Pumpe |
| 24 | geringere Dämpfung | 74 | Ventil |
| 25 | größere Dämpfung | 75 | Druckspeicher |
| 26 | maximale Dämpfung | 76 | Umsetzer |
| 27 | Dämpfung | 77 | Luftkammer |
| 28 | Schließgeschwindigkeit | 78 | Stellkolben |
| 29 | zweiter Ausgleichskanal | 80 | Motor |
| 30 | Kolbeneinheit | 81 | Zahnrad |
| 31 | Zylindereinheit | 82 | Federeinrichtung |
| 32 | Zylindervolumen | 83 | Federeinrichtung |
| 33 | erste Kammer | 84 | Dauermagnet |
| 34 | zweite Kammer | 85 | Hubmagnet |
| 35 | Rückkanal | 86 | Fluidleitung |
| 36 | Ausgleichsvolumen | 87 | Steuerkammer |
| 37 | Ausgleichskammer | 90 | Kolben-Zylinder-Einheit |
| 37a | Ausgleichskolben | 100 | Fahrzeug |
| | | 101 | Tragkonstruktion |

## Patentansprüche

1. Türkomponente (50) mit einer zwei relativ zueinander bewegbare Anschlusseinheiten (51, 52) umfassenden Dämpfereinrichtung (1) zur Dämpfung einer Türbewegung einer Tür eines Fahrzeugs (100), wobei die Dämpfereinrichtung (1) ein magnetorheologisches Fluid (6) als Arbeitsfluid enthält und eine Zylindereinheit (31) mit einer ersten Kammer (33) und einer zweiten Kammer (34) umfasst, wobei die beiden Kammern (33, 34) durch eine mit einem Dämpfungsventil (5) ausgerüstete Kolbeneinheit (30) voneinander getrennt sind, und wobei die Kolbeneinheit (30) wenigstens von einer ersten Stellung (2) in wenigstens eine zweite Stellung (3) überführbar ist,
wobei die Dämpfereinrichtung (1) eine zur Kopplung mit einer Antriebseinrichtung (70) ausgebildete Anschlusseinrichtung (71) umfasst, und dass eine Bewegung der Kolbeneinheit (30) relativ zu der Zylindereinheit (31) mittels der koppelbaren Antriebseinrichtung (70) aktiv wenigstens von einer ersten Stellung (2) in eine zweite Stellung (3) unterstützbar ist, **dadurch gekennzeichnet,**
**dass** eine Bewegung der Kolbeneinheit (30) durch die Antriebseinrichtung (70) unterstützbar ist, sodass unabhängig von der Ausrichtung des Fahrzeugs die gleiche Betätigungsskraft zur Bewegung der Kolbeneinheit (30) aufgebracht werden muss.

2. Türkomponente (50) nach dem vorhergehenden Anspruch, wobei die Dämpfereinrichtung (1) aktiv von der zweiten Stellung (3) in die erste Stellung (2) bewegbar ist.

3. Türkomponente (50) nach einem der vorhergehenden Ansprüche, wobei die zweite Stellung (3) eine Öffnungsstellung und die erste Stellung eine Schließstellung ist.

4. Türkomponente (50) nach einem der vorhergehenden Ansprüche, wobei die Dämpfereinrichtung (1) eine Luftkammer (77) umfasst, die in Wirkverbindung mit der Kolbeneinheit (30) steht, wobei insbesondere die Anschlusseinrichtung (71) wenigstens einen Fluidanschluss an der Luftkammer (77) umfasst und/oder wobei die Luftkammer (77) als Ausgleichskammer (37) für ein in die Zylindereinheit (31) eintauchendes Volumen einer Kolbenstange (43) der Kolbeneinheit (30) ausgebildet ist.

5. Türkomponente (50) nach dem vorhergehenden Anspruch, wobei die Ausgleichskammer (37) durch einen Ausgleichskolben (37a) von der ersten oder zweiten Kammer (33, 34) getrennt ist.

6. Türkomponente (50) nach einem der drei vorhergehenden Ansprüche, wobei der Dämpfereinrichtung (1) eine Pumpe (73) und/oder ein steuerbares Ventil (74) zugeordnet ist und mit der Anschlusseinrichtung (71) verbunden ist.

7. Türkomponente (50) nach einem der vorhergehenden Ansprüche, wobei der Dämpfereinrichtung (1) wenigstens ein Druckspeicher (75) zugeordnet ist, wobei vorzugsweise der Druckspeicher (75) durch das Fahrzeug (100) aufladbar ist.

8. Türkomponente (50) nach einem der vorhergehenden Ansprüche, wobei die Dämpfereinrichtung (1) durch eine Federeinrichtung (82, 83) in eine der beiden Stellungen (2, 3) vorbelastet ist und wobei insbesondere die Dämpfereinrichtung (1) mit der Antriebseinrichtung (70) entgegen einer Federkraft der Federeinrichtung (82, 83) in die Richtung der anderen Stellung (2, 3) bewegbar ist.

9. Türkomponente (50) nach einem der vorhergehenden Ansprüche, wobei die Anschlusseinrichtung (71) wenigstens eine als Motor (80) ausgebildete Antriebseinrichtung (70) umfasst.

10. Türkomponente (50) nach dem vorhergehenden Anspruch, wobei der Motor (80) elektrisch, hydraulisch oder pneumatisch oder piezoelektrisch antreibbar ist.

11. Türkomponente (50) nach einem der vorhergehenden Ansprüche, wobei der Motor (80) über einen Umsetzer (76) mit der Dämpfereinrichtung (1) gekoppelt ist, wobei der Umsetzer (76) eine Drehbewegung in eine Längsbewegung umwandelt.

12. Türkomponente (50) nach einem der vorhergehenden Ansprüche, wobei der Umsetzer (76) eine Zahnstange (72) und ein damit kämmendes Zahnrad (81) umfasst.

13. Türkomponente (50) nach einem der vorhergehenden Ansprüche, wobei die Antriebseinrichtung einen Hubmagneten umfasst.

14. Türkomponente (50) nach einem der beiden vorhergehenden Ansprüche, wobei der Motor (80) mit einer Kolbenstange (43) der Dämpfereinrichtung (1) gekoppelt ist.

15. Türkomponente (50) nach dem vorhergehenden Anspruch, wobei die Dämpfereinrichtung (1) einen von einer magnetorheologischen Flüssigkeit (6) durchströmbaren Strömungskanal (7) umfasst, wobei der Strömungskanal (7) einem veränderbaren Magnetfeld der Magnetfeldquelle (x8) aussetzbar ist, sodass der Strömungswiderstand des Strömungskanals (7) und somit eine Dämpfung der Dämpfereinrichtung (1) über das Magnetfeld (8) in dem Strömungskanal (7) beeinflussbar ist.

## Claims

1. Door component (50) with a damper device (1) comprising two connecting units (51, 52) movable relative to one another for damping the movement of a door of a vehicle (100), the damper device (1) comprising a magnetorheological fluid (6) as the working fluid and comprising a cylinder unit (31) with a first chamber (33) and a second chamber (34), wherein the two chambers (33, 34) are separated from one another by a piston unit (30) equipped with a damping valve (5), and wherein the piston unit (30) can be transferred at least from a first position (2) to at least one second position (3),
wherein the damper device (1) comprises a connector (71) configured for coupling with a driving device (70), and that movement of the piston unit (30) relative to the cylinder unit (31) can be actively assisted by means of the coupling driving device (70) at least from a first position (2) to a second position (3),
**characterized in**
**that** the driving device (70) can assist the movement of the piston unit (30) so that, independently of the orientation of the vehicle, the same operating force is required for moving the piston unit (30).

2. The door component (50) according to the preceding claim wherein the damper device (1) can be actively moved from the second position (3) to the first position (2).

3. The door component (50) according to any of the preceding claims wherein the second position (3) is an open position and the first position, a closed position.

4. The door component (50) according to any of the preceding claims wherein the damper device (1) comprises an air chamber (77) which is in functional connection with the piston unit (30) wherein in particular the connector (71) comprises at least one fluid connection at the air chamber (77) and/or wherein the air chamber (77) is configured as an equalizing chamber (37) for the volume of a piston rod (43) of the piston unit (30) dipping into the cylinder unit (31).

5. The door component (50) according to the preceding claim wherein the equalizing chamber (37) is separated from the first or second chamber (33, 34) by an equalizing piston (37a).

6. The door component (50) according to any of the three preceding claims wherein a pump (73) and/or a controlled valve (74) is assigned to the damper device (1) and connected with the connector (71).

7. The door component (50) according to any of the preceding claims wherein at least one pressure accumulator (75) is assigned to the damper device (1) wherein the pressure accumulator (75) can preferably be charged by the vehicle (100).

8. The door component (50) according to any of the preceding claims wherein a spring device (82, 83) biases the damper device (1) in one of the two positions (2, 3) and wherein the damper device (1) can in particular be moved by means of the driving device (70) against the spring force of the spring device (82, 83) in the direction of the other of the positions (2, 3).

9. The door component (50) according to any of the preceding claims wherein the connector (71) comprises at least one driving device (70) configured as a motor (80).

10. The door component (50) according to the preceding claim wherein the motor (80) is driven electrically, hydraulically or pneumatically or piezoelectrically.

11. The door component (50) according to any of the preceding claims wherein the motor (80) is coupled with the damper device (1) through a converter (76) wherein the converter (76) converts rotational movement to longitudinal movement.

12. The door component (50) according to any of the preceding claims wherein the converter (76) comprises a toothed rack (72) and a toothed wheel (81) meshing therewith.

13. The door component (50) according to any of the preceding claims wherein the driving device comprises a lifting magnet.

14. The door component (50) according to any of the two preceding claims wherein the motor (80) is coupled with a piston rod (43) of the damper device (1).

15. The door component (50) according to the preceding claim wherein the damper device (1) comprises a flow duct (7) through which a magnetorheological liquid (6) can flow, wherein the flow duct (7) can be exposed to a variable magnetic field of the magnetic field source (x8) so that the flow resistance of the flow duct (7) and thus the damping of the damper device (1) can be influenced through the magnetic field (8) in the flow duct (7).

## Revendications

1. Composant de porte (50) ayant un dispositif amortisseur (1) comprenant deux unités de connexion (51, 52) aptes à être déplacées l'une par rapport à l'autre et destiné à amortir un mouvement de portière d'une portière d'un véhicule (100), dans lequel ledit dispositif amortisseur (1) contient un fluide magnétorhéologique (6) en tant que fluide de travail et comprend une unité de cylindre (31) ayant une première chambre (33) et une deuxième chambre (34), dans lequel les deux chambres (33, 34) sont séparées l'une de l'autre par une unité à piston (30) équipée d'une valve d'amortissement (5), et dans lequel on peut faire passer ladite unité à piston (30) au moins d'une première position (2) à au moins une deuxième position (3),
dans lequel le dispositif amortisseur (1) comprend un dispositif de connexion (71) conçu pour être couplé à un dispositif d'entraînement (70), et qu'un mouvement de l'unité à piston (30) par rapport à l'unité de cylindre (31) peut être supporté de manière active, au moyen du dispositif d'entraînement (70) apte à être couplé, au moins depuis une première position (2) dans une deuxième position (3),
**caractérisé par le fait**
**qu'**un mouvement de l'unité à piston (30) peut être supporté par le dispositif d'entraînement (70) de sorte que, quelle que soit l'orientation du véhicule, la même force d'actionnement doit être appliquée pour déplacer l'unité à piston (30).

2. Composant de porte (50) selon la revendication précédente, dans lequel le dispositif amortisseur (1) peut être déplacé de manière active depuis la deuxième position (3) dans la première position (2).

3. Composant de porte (50) selon l'une quelconque des revendications précédentes, dans lequel la deuxième position (3) est une position ouverte et la première position est une position fermée.

4. Composant de porte (50) selon l'une quelconque des revendications précédentes, dans lequel le dispositif amortisseur (1) comprend une chambre à air (77) qui est en liaison active avec l'unité à piston (30), dans lequel, en particulier, le dispositif de connexion (71) comprend au moins un raccordement de fluide sur la chambre à air (77) et/ou dans lequel la chambre à air (77) est conçue en tant que chambre de compensation (37) pour un volume d'une tige de piston (43) de l'unité à piston (30), qui plonge dans l'unité de cylindre (31).

5. Composant de porte (50) selon la revendication précédente, dans lequel la chambre de compensation (37) est séparée de la première ou de la deuxième chambre (33, 34) par un piston de compensation (37a).

6. Composant de porte (50) selon l'une quelconque des trois revendications précédentes, dans lequel une pompe (73) et/ou une valve (74) commandable est associée au dispositif amortisseur (1) et est reliée au dispositif de connexion (71).

7. Composant de porte (50) selon l'une quelconque des revendications précédentes, dans lequel au moins un accumulateur de pression (75) est associé au dispositif amortisseur (1), dans lequel, de préférence, ledit accumulateur de pression (75) peut être chargé par le véhicule (100).

8. Composant de porte (50) selon l'une quelconque des revendications précédentes, dans lequel le dispositif amortisseur (1) est pré-sollicité par un dispositif faisant ressort (82, 83) dans l'une des deux positions (2, 3), et dans lequel, en particulier, le dispositif amortisseur (1) peut être déplacé par le dispositif d'entraînement (70) à l'encontre d'une force de ressort du dispositif faisant ressort (82, 83) dans la direction de l'autre position (2, 3).

9. Composant de porte (50) selon l'une quelconque des revendications précédentes, dans lequel le dispositif de connexion (71) comprend au moins un dispositif d'entraînement (70) réalisé en tant que moteur (80).

10. Composant de porte (50) selon la revendication précédente, dans lequel le moteur (80) peut être entraîné de façon électrique, hydraulique ou pneumatique ou piézoélectrique.

11. Composant de porte (50) selon l'une quelconque des revendications précédentes, dans lequel le moteur (80) est couplé par un transformateur (76) au dispositif amortisseur (1), dans lequel ledit transformateur (76) transforme un mouvement rotatif en un mouvement longitudinal.

12. Composant de porte (50) selon l'une quelconque des revendications précédentes, dans lequel ledit transformateur (76) comprend une crémaillère (72) et une roue dentée (81) qui s'engrène avec celle-ci.

13. Composant de porte (50) selon l'une quelconque des revendications précédentes, dans lequel le dispositif d'entraînement comprend un aimant de levage.

14. Composant de porte (50) selon l'une quelconque des deux revendications précédentes, dans lequel le moteur (80) est couplé à une tige de piston (43) du dispositif amortisseur (1).

15. Composant de porte (50) selon la revendication précédente, dans lequel le dispositif amortisseur (1) comprend un canal d'écoulement (7) apte à être traversé par un liquide magnétorhéologique (6), dans lequel ledit canal d'écoulement (7) peut être exposé à un champ magnétique (8) variable de la source de champ magnétique (x8) de sorte que la résistance à l'écoulement du canal d'écoulement (7) et donc un amortissement du dispositif amortisseur (1) peuvent être influencés par le champ magnétique (8) dans le canal d'écoulement (7).
